Europäisches Patentamt

European Patent Office

Office européen des brevets

(19)

(11) **EP 0 488 849 B1**

(12) **FASCICULE DE BREVET EUROPEEN**

(45) Date de publication et mention
de la délivrance du brevet:
**26.04.2000 Bulletin 2000/17**

(51) Int. Cl.[7]: **H04N 5/33**, H04N 5/20

(21) Numéro de dépôt: **91403079.6**

(22) Date de dépôt: **15.11.1991**

(54) **Dipositif automatique de réglage de la luminosité d'images issues d'une caméra, et caméra comportant un tel dispositif**

Automatische Helligkeitsregelungsvorrichtung von Bildern einer Kamera und Kamera mit einer solchen Vorrichtung

Automatic brightness adjusting device of images generated by a camera and camera with such a device

(84) Etats contractants désignés:
**DE FR GB IT NL**

(30) Priorité: **23.11.1990 FR 9014615**

(43) Date de publication de la demande:
**03.06.1992 Bulletin 1992/23**

(73) Titulaire: **THOMSON-CSF
75379 Paris Cédex 08 (FR)**

(72) Inventeur: **Souty, Dominique
F-92045 Paris la Défense (FR)**

(74) Mandataire: **Lincot, Georges et al
Thomson-CSF Propriété Intellectuelle,
Département Brevets,
13, Avenue du Président Salvador Allende
94117 Arcueil Cédex (FR)**

(56) Documents cités:
**FR-A- 2 596 227          GB-A- 2 129 635**

**Description**

L'invention se rapporte au domaine des caméras et a plus particulièrement pour objet un dispositif de réglage de la luminosité des images et une caméra, notamment thermique, comportant un tel dispositif.

Dans une image constituée de plusieurs scènes, s'il y a trop de contraste, l'image est saturée et s'il n'y en a pas assez l'image apparaît entièrement grise ; par exemple dans une image issue d'une caméra thermique, infra-rouge, il existe des éléments "chauds", notamment la terre, et des éléments froids, notamment le ciel. Le gain (contraste) des caméras thermiques est commandé manuellement par l'opérateur, et le niveau moyen quant à lui n'est pas ajusté : ainsi une scène totalement froide peut donner la même image qu'une scène totalement chaude, c'est-à-dire une image grise.

L'invention a pour but d'éviter ce défaut afin d'obtenir une image dans laquelle le niveau moyen de la luminosité est maintenu à une valeur convenable quel que soit le contenu de l'image, et notamment quel que soit le pourcentage de ciel dans l'image. L'invention a donc pour objet un dispositif permettant de résoudre le problème de l'obtention d'une luminosité moyenne correcte par une commande de niveau moyen tenant compte du contenu de l'image automatiquement. Pour cela l'invention met en oeuvre une commande automatique de niveau moyen à partir d'une analyse des images, de façon que le niveau moyen dans une zone dite zone de recalage connue a priori comme étant dans une zone de terre (à défaut dans une zone de ciel) soit maintenu à une valeur de référence.

A cet effet l'invention a pour objet un dispositif automatique de réglage de la luminosité d'images issues d'une caméra ne laissant pas passer la composante continue du signal vidéo généré par la caméra, caractérisé en ce qu'il comporte, dans un circuit de commande C :

- un automate d'analyse statistique (100) des images effectuant la mise en mémoire d'histogrammes constitués des niveaux de luminosité d'un ensemble de points analysés dans une zone d'image déterminée et connue à priori comme étant une zone de terre, appelée zone de recalage (ZR),
- un calculateur (200) permettant, à chaque nouvelle acquisition d'histogrammes de la zone de recalage (ZR), de calculer à partir des histogrammes, dans une boucle d'asservissement, le niveau moyen de luminosité ((Lm)mes) de la zone de recalage (ZR), de comparer ce niveau ((Lm)mes) à un niveau moyen de référence ((Lm)réf), l'erreur évaluée par la différence de ces deux niveaux étant filtrée par un filtre correcteur à boucle comportant au moins un intégrateur garantissant la stabilité de l'asservissement, et permettant d'obtenir un signal de commande de niveau moyen de luminosité,
- un circuit d'interface (400) de commande du niveau moyen de luminosité de l'image, convertissant le signal de commande en une commande de correction déterminée (Cvm) qui est injectée à une entrée de correction correspondante de la caméra pour minimiser l'erreur entre le niveau moyen mesuré ((Lm)mes) et le niveau moyen de référence ((Lm)réf),
- et en ce qu'une zone de recalage supplémentaire est choisie dans une zone d'image connue à priori comme étant une zone de ciel et sauvegardée à chaque nouveau calcul de niveau moyen de la luminosité dans la zone de recalage de terre, la valeur moyenne de la luminosité dans la dernière zone de ciel sauvegardée étant utilisée comme référence de niveau moyen de l'image lorsque la zone de terre disparaît de l'image.

Le principe de la solution mise en oeuvre dans la présente invention est donc une analyse de la luminosité d'une zone de l'image dite zone de recalage.

L'invention a également pour objet une caméra, notamment une caméra thermique embarquée, comportant un tel dispositif.

L'invention sera mieux comprise et d'autres caractéristiques apparaîtront à l'aide de la description qui suit, en référence aux figures annexées.

La figure 1 illustre une chaîne de traitement du signal issu d'une caméra infra-rouge, selon l'invention ;
La figure 2 illustre le schéma synoptique du dispositif de commande automatique selon l'invention ;
La figure 3 illustre le découpage en 96 zones des images pour l'analyse statistique effectuée par le dispositif suivant l'invention ;
La figure 4 est un schéma explicatif ;
La figure 5 illustre des formes de zones de recalage de niveau moyen ;
La figure 6 est un schéma synoptique de la bouche d'asservissement de niveau moyen.

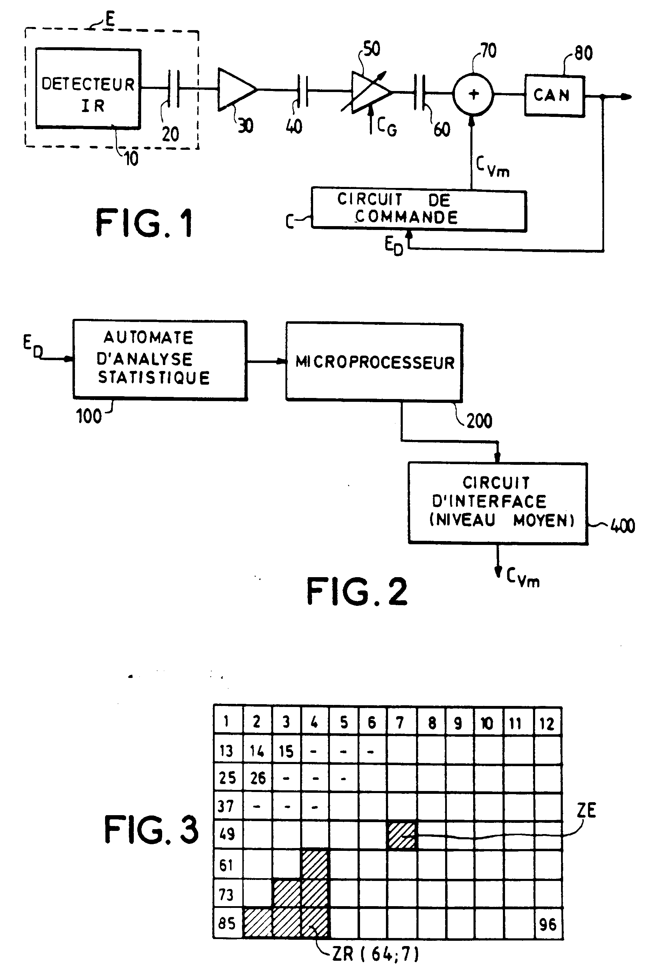

La chaîne de traitement de signal d'une caméra thermique, infra-rouge, selon l'invention est représentée sur la figure 1. Elle comporte de manière classique un détecteur infra-rouge 10 et un circuit de coupure de la composante continue, représenté par un condensateur 20, formant un ensemble E, cet ensemble étant refroidi à -200°C pour diminuer le bruit dans le signal utile. Cet ensemble est suivi d'un amplificateur 30. Pour la commande de contraste, un amplificateur à gain variable 50 précédé d'un condensateur de découplage 40, est prévu, cet amplificateur est commandé manuellement par un opérateur. La sortie de cet amplificateur est couplée à l'entrée d'un convertisseur analogique numérique 80 via un condensateur 60, et via un additionneur 70 permettant d'ajouter au signal de sortie de l'amplificateur à gain variable un signal de commande $C_{Vm}$, permettant un ajustement automatique du niveau moyen, fourni par un circuit de commande C.

Le circuit de commande C illustré sur la figure 2 est principalement constitué

- d'un automate d'analyse statistique 100, ayant une entrée de données numériques $E_D$ et effectuant un analyse statistique de l'image,
- un microprocesseur 200, qui, à partir des résultats de cette analyse statistique élabore la valeur de consigne nécessaire à la commande de niveau moyen (luminosité) ;
- un circuit d'interférence 400, pour transmettre un signal de commande de niveau moyen $C_{Vm}$ à l'additionneur de la chaîne de traitement.

L'automate d'analyse statistique de l'image 100, dans un mode de réalisation, fonctionne de la manière suivante :

Dans une première phase, après une demande d'acquisition de signaux de commande par le microprocesseur 200, l'image est découpée en 96 zones élémentaires ZE portant chacune un numéro, et, pour chacune de ces zones un histogramme des valeurs de luminance est établi. Les 96 zones sont organisées en 12 zones par ligne d'image et 8 zones par colonne d'image, comme illustré par la figure 3. Dans un mode de réalisation, l'histogramme d'une zone est établi à partir d'un nombre limité de points, soit 256 points par zone pour une image constituée de 510 lignes de 780 points sur le détecteur : pour cela, dans le sens horizontal seul 1 point sur 4 est analysé (soit 16 points par ligne pour chaque zone) et dans le sens vertical, dans chaque zone, seule une ligne sur deux des trames paires est analysée (soit 16 lignes).

En pratique, lorsque le microprocesseur demande une acquisition, celle-ci est effectuée pendant la trame suivante de durée 16 ms. Les valeurs de luminance des points sont stockées dans une mémoire de l'automate d'analyse statistique 100 de 8 K octets, pour stocker 96 fois 64 octets, si les niveaux de luminosité de l'image sont numérisés sur 64 niveaux. A la fin de l'analyse le microprocesseur est interrompu. Il peut alors, en lisant la mémoire effectuer son traitement. Avant un nouveau traitement le microprocesseur efface la mémoire.

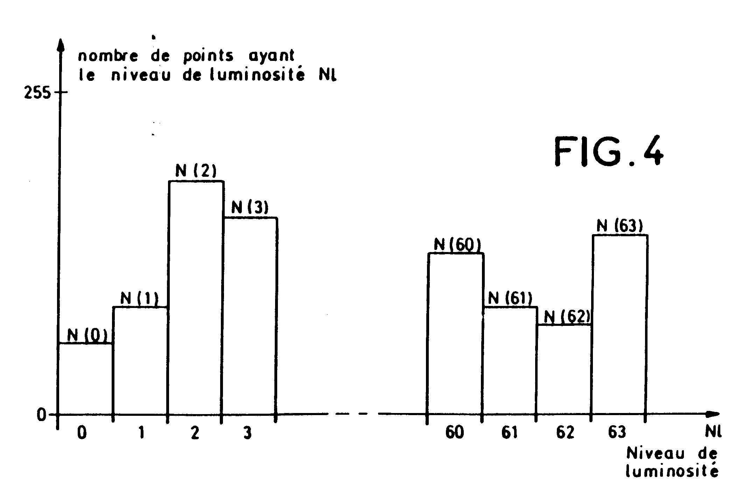

La figure 4 illustre un exemple d'histogramme donnant pour chaque niveau de luminosité 1 de 0 à 63 le nombre N(1)des points analysés dans chaque zone ayant ce niveau (la somme des points analysés de chaque zone est égal à 256 dans le mode de réalisation décrit). L'histogramme d'une zone est donc constitué de 64 octets, un octet pour chaque niveau de luminosité, chaque octet donnant le nombre de points de la zone ayant le niveau correspondant au rang de cet octet.

Pour maintenir automatiquement le niveau moyen à une valeur convenable, une zone dite zone de recalage est déterminée dans l'image, et un asservissement de niveau moyen est effectué pour maintenir la luminance moyenne, dans cette zone de recalage de l'image, constante.

La partie la plus intéressante de l'image est celle montrant la terre. Aussi, tant que la terre apparaît sur l'image, l'asservissement est appliqué à partir une zone de recalage choisie a priori dans une zone de "terre" pour y maintenir une luminosité constante.

Dès que la terre disparaît de l'image, ce qui arrive notamment lorsque les images sont prises par des systèmes embarqués à bord d'aéronefs, l'asservissement est appliqué à une zone de ciel, mais, pour assurer la continuité, la luminance moyenne de la zone de ciel est maintenue au niveau qu'elle avait juste avant la disparition de la terre de l'image.

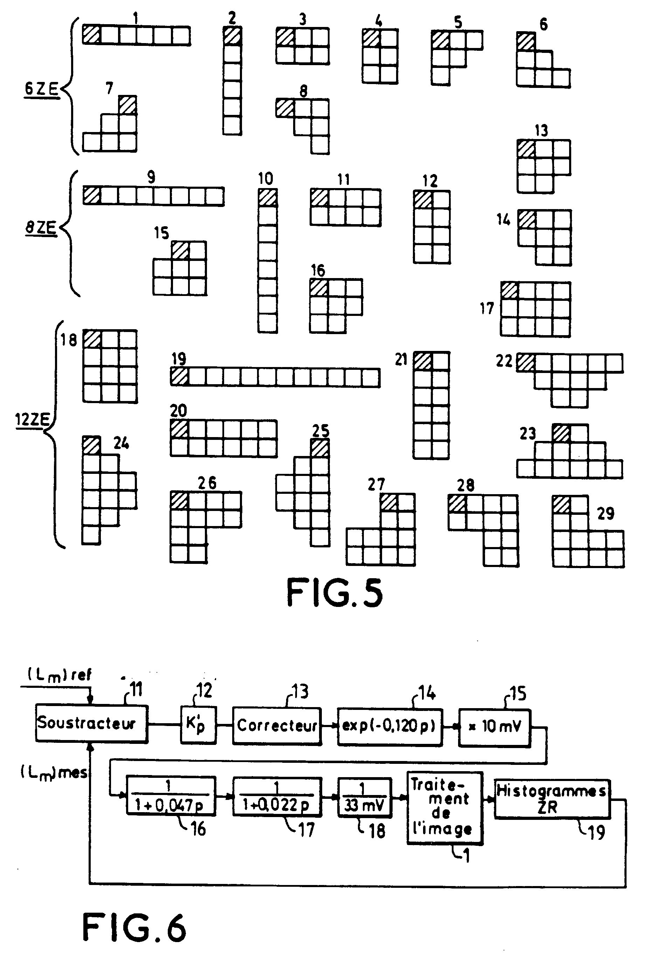

La zone de recalage est un ensemble de zones élémentaires ZE telles que définies ci-dessus contiguës dans l'image (chaque ZE ayant au moins un côté commun avec une autre zone ZE). En pratique une zone de recalage peut contenir, 6, 8, ou 12 zones élémentaires $Z_E$. Une zone de recalage est définie par deux octets ; le premier octet désigne la position de la zone dans l'image et le second définit la forme de la zone de recalage. La position de la zone utilise une numérotation des zones qui peut être celle indiquée sur la figure 3, et, parmi les zones élémentaires ZE formant la zone de recalage ZR, c'est le numéro de la zone élémentaire la plus à gauche de la ligne la plus haute qui est transmise : par exemple, pour la zone de recalage ZR à 6 ZE représentée à titre d'exemple sur la figure 3, dont la forme est désignée par le numéro 7, la zone est désignée par les octets ZR (64 ; 7). Les zones de recalage à 6, 8, 12 zones élémentaires sont illustrées sur la figure 5 qui précise par des hachures la zone élémentaire dont la position dans l'image donne la position de la zone de recalage.

Après une acquisition, la moyenne de la luminosité de cette zone de recalage est calculée à partir des histogrammes des zones élémentaires constituant cette zone de recalage, qui ont été acquis par l'automate d'analyse statistique 100. Cette moyenne est le niveau moyen de luminosité mesuré sur une trame : (Lm)mes. Cette mesure est ensuite comparée au niveau moyen de référence de terre (Lm)RefT. L'erreur évaluée par différence est filtrée par le correcteur d'une boucle d'asservissement décrite ci-après. Lorsque la zone de recalage de terre existe dans l'image, le niveau de luminosité moyenne de référence est constant. Si la luminosité de l'image varie de 0 pour des températures chaudes à 63 pour les températures froides comme indiqué ci-dessus, en contraste positif les points chauds apparaissent en blanc et les points froids en noir. En contraste positif, la luminosité moyenne de référence est choisie égale à 37 dans le mode de réalisation décrit. Un contraste négatif pourrait être choisi ; Dans ce cas le niveau de luminosité de référence (Lm)ref serait égal à 63 moins le niveau moyen de référence de terre égal 37, c'est-à-dire égal à 26. La sélection du type de contraste permet de mieux voir les points chauds en contraste positif dont les niveaux sont entre 0 et 37 ou les points froids en contraste négatif dont les niveaux sont entre 26 et 63.

Comme il a été indiqué ci-dessus, lorsque la terre a disparu de l'image, il est nécessaire de maintenir le niveau moyen d'une zone de recalage de ciel au niveau moyen qu'elle avait juste avant la disparition de la terre. Pour cela, tant que la terre est apparente, les histogrammes de luminosité de la dernière zone de recalage de ciel sont sauvegardés. Dès que la terre disparaît de l'image le niveau moyen de la zone de recalage de ciel sauvegardée est calculé, soit (LM)refC. Ensuite, selon le type de contraste à l'instant de la sauvegarde, une éventuelle correction est appliquée :

- en contraste positif  (Lm)RefC = (Lm)RefC
- en contraste négatif  (Lm)RefC = 63 - (Lm)RefC .

Puis à chaque nouvelle acquisition, tant que la terre ne réapparaît pas, le niveau moyen de la zone de recalage du ciel est maintenu à la valeur de référence ainsi établie.

Pour obtenir l'asservissement, la commande analogique est appliquée par logiciel via un convertisseur numérique-analogique dans le circuit d'interface 400 dont le pas de quantification est 10 mV. Le circuit d'interface 400 filtre cette commande analogique à travers deux filtres passe-bas dont les fonctions de transfert dans un mode de réalisation on été choisies respectivement à 1/1+0,022p et l'autre 1/1+0,047p. Comme illustré sur la figure 1 la commande ainsi filtrée $C_{Vm}$ est ajoutée au signal vidéo de l'ensemble de l'image via l'additionneur 70 avant conversion analogique-numérique par le convertisseur 80, cette dernière étant effectuée avec un pas de quantification de 33 mV. Le calcul du niveau moyen étant effectué sur des zones de recalage de 6, 8 ou 12 zones élémentaires ZE, le résultat brut donne donc 6, 8 ou 12 fois le niveau moyen. Pour éviter de diviser par 3, le résultat est ramené quel que soit le nombre de zones élémentaires à 3 fois le niveau moyen, le rapport des pas de quantification du convertisseur analogique du circuit d'interface gain à celui du convertisseur analogique-numérqieu 80 de la chaîne d'organisation du signal étant égal à 1/3 (10:33). La division par trois est ainsi réalisée par le matériel.

Le retard pur dû à l'acquisition et au traitement est de 80 ms, et le retard pur sensiblement équivalent à l'échantillonneur-bloqueur formant le convertisseur numérique-analogique est égal à 40 ms, soit un retard total de 120 ms. La fonction de transfert est alors exp(-0,120p).

Le schéma fonctionnel de la boucle d'avertissement du niveau moyen ayant les caractéristiques mentionnées ci-dessus est illustré sur la figure 6. Il comporte un soustracteur 11, recevant d'une part le niveau moyen de référence (Lm)réf. de terre T ou à défaut de ciel C et d'autre part le niveau moyen mesuré (Lm)mes. Ce soustracteur est suivi d'un amplificateur K'p, 12 et d'un correcteur 13 dont le but est d'assurer la stabilité de la boucle et d'annuler l'erreur sur le niveau moyen en régime permanent. Ce régime permanent est par hypothèse une image dont la luminosité moyenne est constante. Compte tenu des hypothèses ci-dessus, ce correcteur, réalisé par logiciel, est essentiellement un intégrateur simple ; ainsi l'asservissement est de classe 1. La boucle fait apparaître la fonction de transfert 14 correspondant au retard total (120 ms) puis la conversion 15 par le convertisseur CNA du circuit d'interface 400, et les deux filtrages passe-bas, 16 et 17 et la conversion 18 par le convertisseur CAN. Le traitement de l'image 1 permettant d'obtenir les histogrammes des zones élémentaires est suivi du traitement 19, nécessaire à la mesure de niveau moyen comme indiqué ci-dessus. A partir des histogrammes de la zone de recalage ZR (chaque histogramme d'une zone élémentaire ZE comprend 64 octets N(1), 1 variant de 0 à 63) le niveau moyen de la zone de recalage multiplié par 3 est donc calculé par la formule suivante :

$$3(Lm)mes = \frac{3}{(N_{ZE})ZR} \times \frac{1}{256} \sum_{1=0}^{63} 1 \sum \frac{H(1)}{(N_{ZE})ZR}$$

$(N_{ZE})ZR$ est le nombre de zones élémentaires dans la zone de recalage choisie.

Le rapport 1/256 assure la moyenne sur 256 points par histogramme. Le rapport $1/(N_{ZE})ZR$ assure la moyenne sur l'ensemble des histogrammes des ZE correspondant à la zone de recalage.

Ainsi, avec cette correction des niveaux moyens les niveaux de gris de la terre ne dépendent plus du pourcentage de ciel dans l'image. De plus on évite la saturation et les détails de l'image sont toujours vus. Cette commande de niveau moyen est particulièrement utile pour les systèmes embarqués car le pourcentage de ciel dans l'image peut varier fortement et une correction de gain seule entraînerait corrélativement des variations importantes de la luminance moyenne dans les zones utiles de l'image. Pour le choix des zones de recalage, le système peut tenir compte de la position de l'horizon dans l'image ; en effet, dans un système embarqué, le calculateur à bord de l'avion sait déterminer où est l'horizon dans l'image et donc en déduire des zones de recalage connues a priori dans la partie terre ou dans la partie ciel de l'image.

L'invention n'est pas limitée au mode de réalisation décrit et illustré. En particulier, il ressort de la description que la commande de niveau de luminoslté est appliquée avant d'effectuer la conversion analogique numérique. Ce mode de réalisation est préféré car la correction ainsi appliquée est plus facile à mettre en oeuvre. Cependant il est possible d'introduire cette correction en numérique après la conversion analogique - numérique.

De plus, le calcul du niveau moyen pris de l'erreur de niveau moyen est effectué dans le mode de réalisation décrit ci-dessus par un système de traitement numérique mettant en oeuvre un microprocesseur travaillant à partir de valeurs acquises par un automate d'analyse statistique par zones élémentaires.

Il est également possible d'effectuer le traitement nécessaire au calcul de l'erreur de niveau moyen dans un automate analysant directement les valeurs de luminance de points répartis dans la zone de recalage choisie

Les composants utilisés pour réaliser le circuit de commande sont préférentiellement des composants de technologie HCMOS pour minimiser l'élévation de température.

L'invention s'applique notamment aux caméras infra- rouge mais est également applicable aux autres caméras, notamment dans le domaine visible.

## Revendications

1.  Dispositif automatique de réglage de la luminosité d'images issues d'une caméra ne laissant pas passer la composante continue du signal vidéo généré par la caméra, caractérisé en ce qu'il comporte, dans un circuit de commande C :

    -   un automate d'analyse statistique (100) des images effectuant la mise en mémoire d'histogrammes constitués des niveaux de luminosité d'un ensemble de points analysés dans une zone d'image déterminée et connue à priori comme étant une zone de terre, appelée zone de recalage (ZR),
    -   un calculateur (200) permettant, à chaque nouvelle acquisition d'histogrammes de la zone de recalage (ZR), de calculer à partir des histogrammes, dans une boucle d'asservissement, le niveau moyen de luminosité ((Lm)mes) de la zone de recalage (ZR), de comparer ce niveau ((Lm)mes) à un niveau moyen de référence ((Lm)réf), l'erreur évaluée par la différence de ces deux niveaux étant filtrée par un filtre correcteur à boucle comportant au moins un intégrateur garantissant la stabilité de l'asservissement, et permettant d'obtenir un signal de commande de niveau moyen de luminosité,
    -   un circuit d'interface (400) de commande du niveau moyen de luminosité de l'image, convertissant le signal de commande en une commande de correction déterminée (Cvm) qui est injectée à une entrée de correction correspondante de la caméra pour minimiser l'erreur entre le niveau moyen mesuré ((Lm)mes) et le niveau moyen de référence ((Lm)réf),
    et en ce qu'une zone de recalage supplémentaire est choisie dans une zone d'image connue à priori comme étant une zone de ciel et sauvegardée à chaque nouveau calcul de niveau moyen de la luminosité dans la zone de recalage de terre, la valeur moyenne de la luminosité dans la dernière zone de ciel sauvegardée étant utilisée comme référence de niveau moyen de l'image lorsque la zone de terre disparait de l'image.

2.  Dispositif selon la revendication 1, caractérisé en ce que l'automate (100) analyse l'image à partir d'un nombre déterminé de zones élémentaires (ZE) constituant la zone de recalage (ZR).

3.  Dispositif selon l'une des revendications 1 et 2, caractérisé en ce que l'automate d'analyse statistique analyse un ensemble de points constitué à partir d'un point sur P d'une ligne sur L des trames paires pour des images formées par la caméra à partir de trames entrelacées.

4.  Dispositif selon les revendications 2 et 3, caractérisé en ce que, chaque zone élémentaire comportant 256 points analysés, l'automate d'analyse statistique comporte une mémoire répartie en n zones comportant chacune autant d'octets que de niveaux de luminosité possibles pour l'image.

5.  Dispositif selon la revendication 1, caractérisé en ce que la zone de recalage est formée d'un ensemble de n zones élémentaires contiguës.

6. Dispositif selon la revendication 5, caractérisé en ce que n est choisi parmi les valeurs 6, 8 et 12.

7. Caméra comportant un détecteur de signal d'image et une chaîne de traitement analogique de ce signal, caractérisée en ce qu'elle comporte en outre un dispositif automatique de réglage de la luminosité des images selon l'une des revendications précédentes, et un additionneur (70) prévu dans la chaîne de traitement du signal pour recevoir d'une part le signal d'image et d'autre part la valeur d'erreur de niveau moyen.

8. Caméra selon la revendication 7, caractérisée en ce que, le signal d'image est converti en numérique par un convertisseur analogique-numérique (80) dont la sortie est reliée à l'entrée du circuit de commande (C), la valeur d'erreur de niveau moyen étant convertie en analogique par le circuit d'interface de niveau moyen (400) relié à l'additionneur (70) placé dans la chaîne de traitement analogique.

**Claims**

1. Automatic device for adjusting the brightness of images emanating from a camera blocking the DC component of the video signal generated by the camera, characterized in that it comprises, in a control circuit C:

   - a handler (100) for the statistical analysis of the images performing the storage in memory of histograms consisting of brightness levels of a set of points analysed in a specified image zone which is known a priori to be a land zone, referred to as the resetting zone (ZR),
   - a computer (200) making it possible, with each new acquisition of histograms of the resetting zone (ZR), to compute from the histograms, in a servocontrol loop, the average brightness level ((Lm)mes) of the resetting zone (ZR), to compare this level ((Lm)mes) with an average reference level ((Lm)ref), the error evaluated by the difference of these two levels being filtered by a loop-type corrector filter comprising at least one integrator guaranteeing the stability of the servocontrol, and making it possible to obtain a signal for controlling the average brightness level,
   - an interface circuit (400) for controlling the average brightness level of the image, converting the control signal into a specified correction command (Cvm) which is fed into a corresponding correction input of the camera so as to minimize the error between the measured average level ((Lm)mes) and the average reference level ((Lm)ref),
   and in that an additional resetting zone is chosen in an image zone which is known a priori to be a sky zone and which is saved with each new computation of average level of brightness in the land resetting zone, the average value of the brightness in the last sky zone saved being used as average level reference of the image when the land zone disappears from the image.

2. Device according to Claim 1, characterized in that the handler (100) analyses the image on the basis of a specified number of elementary zones (ZE) constituting the resetting zone (ZR).

3. Device according to one of Claims 1 and 2, characterized in that the statistical analysis handler analyses a set of points which is made up of one point out of P from one line out of L of the even frames for images formed by the camera on the basis of interlaced frames.

4. Device according to Claims 2 and 3, characterized in that, each elementary zone comprising 256 analysed points, the statistical analysis handler comprises a memory divided into n zones each comprising as many bytes as possible brightness levels for the image.

5. Device according to Claim 1, characterized in that the resetting zone is formed of a set of n contiguous elementary zones.

6. Device according to Claim 5, characterized in that n is chosen from among the values 6, 8 and 12.

7. Camera comprising an image signal detector and a channel for the analogue processing of this signal, characterized in that it furthermore comprises an automatic device for adjusting the brightness of the images according to one of the preceding claims, and an adder (70) provided in the signal processing channel so as to receive on the one hand the image signal and on the other hand the error value for the average level.

8. Camera according to Claim 7, characterized in that the image signal is converted into digital by an analogue/digital converter (80) whose output is linked to the input of the control circuit (C), the error value of the average level being converted into analogue by the average level interface circuit (400) linked to the adder (70) placed in the analogue processing channel.

**Patentansprüche**

1. Automatische Regelvorrichtung für die Helligkeit von Bildern aus einer Kamera, die die Gleichkomponente des von der Kamera erzeugten Videosignals nicht durchläßt, dadurch gekennzeichnet, daß sie in einer Steuerschaltung (C) enthält:

   - einen Automaten (100) zur statistischen Analyse der Bilder, der Histogramme speichert, die aus Helligkeitspegeln einer Gruppe von analysierten Punkten in einer bestimmten Bildzone bestehen, die vorab als die Erde zeigend bekannt ist und Eichzone (ZR) genannt wird,
   - einen Rechner (200), der bei jeder neuen Erfassung von Histogrammen der Eichzone (ZR) ausgehend von den Histogrammen in einer Regelschleife den Mittelwert der in der Eichzone (ZR) gemessenen Helligkeitspegel ((Lm)mes) berechnen und diesen Pegel ((Lm)mes) mit einem mittleren Bezugspegel ((Lm)ref) vergleichen kann, wobei der aus der Differenz dieser beiden Pegel ermittelte Fehler in einem Korrekturfilter vom Schleifentyp mit mindestens einem Integrator gefiltert wird, das die Stabilität gewährleistet, woraus sich ein Steuersignal für den mittleren Helligkeitspegel erhalten läßt,
   - eine Schnittstellenschaltung (400) zur Steuerung des mittleren Helligkeitspegels des Bilds, die das Steuersignal in eine bestimmte Korrektursteuerung ($C_{Vm}$) umwandelt, welche an einen entsprechenden Korrektureingang der Kamera angelegt wird, um den Fehler zwischen dem Mittelwert der gemessenen Pegel ((Lm)mes) und dem mittleren Bezugspegel ((Lm)ref) zu minimieren,
   und daß eine zusätzliche Eichzone in einer Bildzone gewählt wird, die vorab als den Himmel zeigend bekannt ist und deren Histogramm bei jeder neuen Berechnung des mittleren Helligkeitspegels in der die Erde zeigenden Eichzone gespeichert wird, wobei der mittlere Helligkeitswert in der letzten gespeicherten den Himmel zeigenden Zone als Bezugswert für den mittleren Helligkeitspegel des Bilds verwendet wird, wenn die die Erde zeigende Bildzone verschwindet.

2. Vorrichtung nach Anspruch 1, dadurch gekennzeichnet, daß der Automat (100) das Bild ausgehend von einer bestimmten Anzahl von Elementarzonen (ZE)analysiert, die die Eichzone (ZR) bilden.

3. Vorrichtung nach einem der Ansprüche 1 und 2, dadurch gekennzeichnet, daß der Automat zur statistischen Analyse eine Gruppe von Punkten analysiert, die ausgehend von einem von P Punkten einer von L Zeilen von geradzahligen Halbbildern gebildet wird, die von der Kamera als verschachtelte Halbbilder erzeugt werden.

4. Vorrichtung nach Anspruch 2 oder 3, dadurch gekennzeichnet, daß für Elementarzonen, die je 256 analysierte Punkte besitzen, der Automat zur statistischen Analyse einen in n Zonen unterteilten Speicher mit je ebenso vielen Bytes aufweist, wie es mögliche Helligkeitspegel für das Bild gibt.

5. Vorrichtung nach Anspruch 1, dadurch gekennzeichnet, daß die Eichzone aus einer Gruppe von n aneinander anschließenden Elementarzonen besteht.

6. Vorrichtung nach Anspruch 5, dadurch gekennzeichnet, daß n aus den Werten 6, 8 und 12 ausgewählt wird.

7. Kamera mit einem Bildsignaldetektor und einer analogen Kette zur Verarbeitung dieses Signals, dadurch gekennzeichnet, daß sie außerdem eine automatische Regelvorrichtung für die Helligkeit der Bilder gemäß einem der vorstehenden Ansprüche sowie einen Addierer (70) in der Signalverarbeitungskette enthält, der einerseits das Bildsignal und andrerseits das Fehlersignal bezüglich des mittleren Pegels empfängt.

8. Kamera nach Anspruch 7, dadurch gekennzeichnet, daß das Bildsignal durch einen Analog/Digitalwandler (80) digitalisiert wird, der mit seinem Ausgang an den Eingang der Steuerschaltung (C) angeschlossen ist, wobei der Fehlerwert des mittleren Pegels durch die Schnittstellenschaltung (400) für den Mittelwert, die an den Addierer (70) in der analogen Verarbeitungskette angeschlossen ist, in ein analoges Signal umgewandelt wird.

## FIG.1

DETECTEUR IR

CAN

CIRCUIT DE COMMANDE

$C_G$

$C_{Vm}$

$E_D$

## FIG.2

$E_D$

AUTOMATE D'ANALYSE STATISTIQUE

MICROPROCESSEUR

CIRCUIT D'INTERFACE (NIVEAU MOYEN)

$C_{Vm}$

## FIG.3

| 1 | 2 | 3 | 4 | 5 | 6 | 7 | 8 | 9 | 10 | 11 | 12 |
|---|---|---|---|---|---|---|---|---|----|----|----|
| 13 | 14 | 15 | – | – | – | | | | | | |
| 25 | 26 | – | – | – | | | | | | | |
| 37 | – | – | – | | | | | | | | ZE |
| 49 | | | | | | | | | | | |
| 61 | | | | | | | | | | | |
| 73 | | | | | | | | | | | |
| 85 | | | | | | | | | | | 96 |

ZR ( 64 ; 7 )

FIG.4

nombre de points ayant
le niveau de luminosité Nl

255

N (0)
N (1)
N (2)
N (3)

N (60)
N (61)
N (62)
N (63)

0

0   1   2   3         60   61   62   63      Nl

Niveau de
luminosité

**FIG.5**

**FIG.6**